# FASCICULE DE BREVET EUROPEEN

(11) **EP 0 883 756 B1**
(45) Date de publication et mention de la délivrance du brevet: **05.09.2001**
(21) Numéro de dépôt: 97952979.9
(22) Date de dépôt: 22.12.1997
(51) Int. Cl.: F16D 25/08

(54) **RECEPTEUR DE COMMANDE HYDRAULIQUE A PLAQUE DE FERMETURE**
NEHMER ZYLINDER EINER HYDRAULISCHBETÄTIGUNG EINER KUPPLUNG
HYDRAULIC CONTROL RECEIVER WITH CLOSING PLATE

(30) Priorité: 23.12.1996 FR 9616028; 11.12.1997 FR 9715834
(43) Date de publication de la demande: 16.12.1998
(73) Titulaire: VALEO, 75017 Paris (FR)
(72) Inventeur: LOPEZ, Carlos Valéo Management Services, Boîte postale 150,F-94017 Créteil (FR); THOMIRE, Sylvain, F-92300 Levallois (FR); REY, Frédéric, F-75011 Paris (FR)
(74) Mandataire: CABINET BONNET-THIRION
(86) Numéro de dépôt international: FR9702386
(87) Numéro de publication internationale: WO9828552

(56) Documents cités:
- EP-A- 0 074 671
- DE-A- 3 043 861
- GB-A- 2 116 282
- GB-A- 2 259 555
- US-A- 4 051 937

## Description

La présente invention concerne les récepteurs hydrauliques, pour commande d'embrayage, notamment de véhicule automobile, comportant une partie fixe comprenant un tube-guide interne et un corps extérieur concentrique définissant une cavité annulaire borgne propre a être alimentée en fluide et à l'intérieur de laquelle est monté mobile axialement un piston portant un élément d'attaque propre à agir sur le dispositif débrayeur d'un embrayage.

Un tel récepteur, appelé également cylindre hydraulique récepteur, est décrit dans le document EP-B-0 168 932.

Dans celui-ci, le tube-guide interne est métallique et fait saillie axialement par rapport au corps extérieur. Ce tube présente à son extrémité arrière un flasque transversal emprisonné, en utilisation, entre deux surfaces opposées formées respectivement sur le corps extérieur et sur une structure fixe sur laquelle se fixe le corps extérieur.

En outre, il est prévu de fixer le flasque au corps par sertissage comme visible à la figure 1 de ce document. Un joint d'étanchéité statique est interposé entre le flasque et la face dorsale du corps extérieur. En utilisation la pression varie dans la cavité délimitant avec le piston une chambre de commande à volume variable.

Dans certains cas il peut être souhaitable de ne pas pincer le flasque entre la structure fixe et le corps extérieur car cela oblige à prévoir une surface spécifique sur la structure fixe.

Dans ce cas on peut songer à faire appel uniquement à une fixation par sertissage du flasque sur le corps extérieur métallique en matière moulable, par exemple à base d'aluminium.

Un problème de résistance de la fixation se pose sous l'effet des variations de pression se produisant, en utilisation, dans la cavité sachant que le flasque du tube-guide forme le fond de cette cavité.

Pour ce faire on peut songer à rigidifier la périphérie interne du flasque, par exemple, à l'aide d'un bourrelet faisant saillie axialement par rapport à la périphérie externe du flasque. Ceci augmente le coût du tube-guide.

La présente invention a pour objet de pallier ces inconvénients de manière simple et économique.

Dans le but de rendre plus robuste la fixation du tube-guide sur le corps extérieur, et de réduire le coût du tube-guide, on a proposé, dans le document GB-A-2 259 555, un récepteur du type sus-indiqué dans lequel des moyens d'assemblage interviennent entre le corps extérieur et le tube-guide pour fixer le tube-guide sur le corps extérieur, le fond de la cavité borgne étant constitué par un rebord interne du corps extérieur dirigé radialement vers l'axe de symétrie axiale du tube-guide. Grâce à cette disposition, ce n'est pas un flasque radial du tube-guide mais un rebord interne du corps extérieur qui est sujet en utilisation aux variations de pression lors des opérations de désengagement et d'engagement de l'embrayage.

Ce rebord interne est plus robuste en sorte que les moyens d'assemblage sont ménagés. La fixation du tube-guide au corps extérieur est plus robuste, plus fiable et plus durable.

En outre le tube-guide est ménagé du fait que c'est le corps extérieur qui subit les variations de pression. Le tube-guide est moins sollicité en sorte que le piston coulisse et se déplace donc de manière plus précise et plus fidèle.

Dans une forme de réalisation, les moyens d'assemblage interviennent entre le rebord interne et le tube guide.

Le tube-guide étant fixé sur le rebord interne fait donc appel à moins de consommation de matière puisque sa fixation au corps externe se fait plus près de l'axe de symétrie axial du tube-guide. Le joint d'étanchéité statique intervenant entre le corps extérieur et le tube-guide est aussi ménagé puisque c'est le rebord interne et donc le corps externe massif qui subit les variations de pression. Ce joint est également plus économique car il est de plus petite taille que celui de l'art antérieur.

Dans une forme de réalisation, l'étanchéité et la fixation du tube-guide sont réalisées entre la périphérie interne du rebord interne et la périphérie externe du tube-guide.

Grâce à ces caractéristiques, le tube-guide peut être dépourvu de flasque transversal et être ainsi de forme purement tubulaire. Ceci permet de réduire les coûts, ainsi que la matière consommée et les opérations de fabrication. Le tube-guide est plus facile à stocker et à manipuler. Le joint d'étanchéité statique a la plus petite taille possible et peut être axialement de forme oblongue pour une meilleure étanchéité.

Dans un mode de réalisation le joint est monté dans une gorge d'étanchéité que présente le rebord interne à sa périphérie interne. Bien entendu, on peut inverser les structures, la gorge étant formée par emboutissage dans le tube métallique.

Les moyens d'assemblage consistent en un refoulement ou fluage local de matière du tube guide dans une gorge d'assemblage du rebord intérieur. La gorge d'assemblage est réalisée à la périphérie interne, d'orientation axiale, du rebord interne. Ainsi la fixation est robuste et fiable, le rebord interne étant plus épais que le tube-guide.

La présente invention a pour but de réduire encore les coûts et de profiter de la présence de cette gorge d'assemblage pour y loger le joint d'étanchéité.

Ainsi, selon l'invention, un récepteur du genre ci-dessus est caractérisé par le fait que la gorge d'assemblage est confondue avec la gorge d'étanchéité ; le joint est interposé entre le fond de la gorge, de préférence de forme évasée vers le tube-guide, et le refoulement local de matière du tube-guide. Ceci permet de réduire le nombre des usinages du corps extérieur.

Dans ce qui précède, la matière du corps extérieur ne subit pas d'opération de sertissage. Ce corps est donc ménagé et peut être ainsi en matière plastique moulable. En variante, le rebord en matière plastique moulable peut être renforcée par un insert par exemple métallique.

On appréciera que la structure fixe n'a pas besoin d'être usinée pour offrir une portée d'appui au tube-guide.

Le corps extérieur peut présenter à l'arrière du rebord interne un logement pour un joint tournant intervenant entre le corps extérieur et un arbre tournant, tel que l'arbre d'entrée de la boîte de vitesses traversant le tube-guide, qui peut entourer le joint tournant.

On notera que le rebord interne est aisément obtenu par moulage.

Du fait que le tube-guide est ménagé, le piston peut coulisser directement sur le tube-guide, et porter à son extrémité avant une pièce porteuse métallique obtenue par emboutissage.

Le piston peut être en matière synthétique telle que de la matière plastique moulable renforcée par des fibres. De préférence, cette matière présente de bonnes qualités de coulissement.

La pièce porteuse, dans une forme de réalisation, sert de support à une rondelle élastique à action axiale, dite rondelle autocentreuse, plaquant un rebord radial interne d'une des bagues de roulement à billes au contact d'un tronçon d'appui de la pièce porteuse. La pièce porteuse porte également l'extrémité d'un soufflet d'étanchéité et d'un ressort de précharge entouré par le soufflet.

Le roulement à billes est destiné à coopérer avec le dispositif débrayeur et est avantageusement étanche.

Le dispositif débrayeur peut consister en des doigts d'un diaphragme formant moyens embrayeurs de l'embrayage ou en des leviers d'embrayages distincts des moyens embrayeurs consistant alors en des ressorts à boudin ou en une rondelle Belleville agissant entre le couvercle et le plateau de pression de débrayage. Cet embrayage peut être doté d'un dispositif de rattrapage d'usure compensant au moins l'usure des garnitures de friction de la friction d'embrayage que comporte l'embrayage.

En variante, le corps extérieur peut consister en une plaque de fermeture de grande taille rapportée sur le carter d'une boite de transmission pour fermer l'ouverture de ladite boîte traversée par un arbre d'entrée.

La plaque de fermeture comporte une protubérance intérieurement creuse appartenant à la partie fixe du récepteur concentrique de la commande hydraulique d'embrayage.

La protubérance est avantageusement d'un seul tenant avec la plaque et présente intérieurement le rebord interne selon l'invention.

Dans une autre forme de réalisation, le tube-guide présente un flasque transversal dirigé radialement vers l'extérieur et sertie au contact de la face arrière du rebord transversal.

D'autres avantages apparaîtront à la lumière de la description qui va suivre, en regard des dessins annexés dans lesquels :
- la figure 1 est une vue de face d'une plaque de fermeture portant un rebord radial interne ;
- la figure 2 est une vue en coupe selon la ligne A-A de la figure 1 ;
- la figure 3 est une vue partielle en coupe à grande échelle montrant l'attelage de la bague non tournante de la butée de débrayage au piston du récepteur ;
- la figure 4 est une vue partielle à grande échelle du sertissage du tube-guide.
- la figure 5 est une vue en perspective d'un récepteur
- la figure 6 est une vue en coupe axiale du récepteur de la figure 5,
- la figure 7 est une vue partielle de la figure 6 montrant la gorge d'assemblage,
- la figure 8 est une vue partielle en coupe axiale du récepteur montrant l'arrière de celui-ci ainsi qu'un moyen d'assemblage du tube-guide au corps externe du récepteur concentrique,
- la figure 9 est une vue analogue à la figure 8,
- la figure 10 est une vue en coupe selon la ligne 10 de la figure 9,
- les figures 11 à 13 sont des vues analogues à la figure 8.

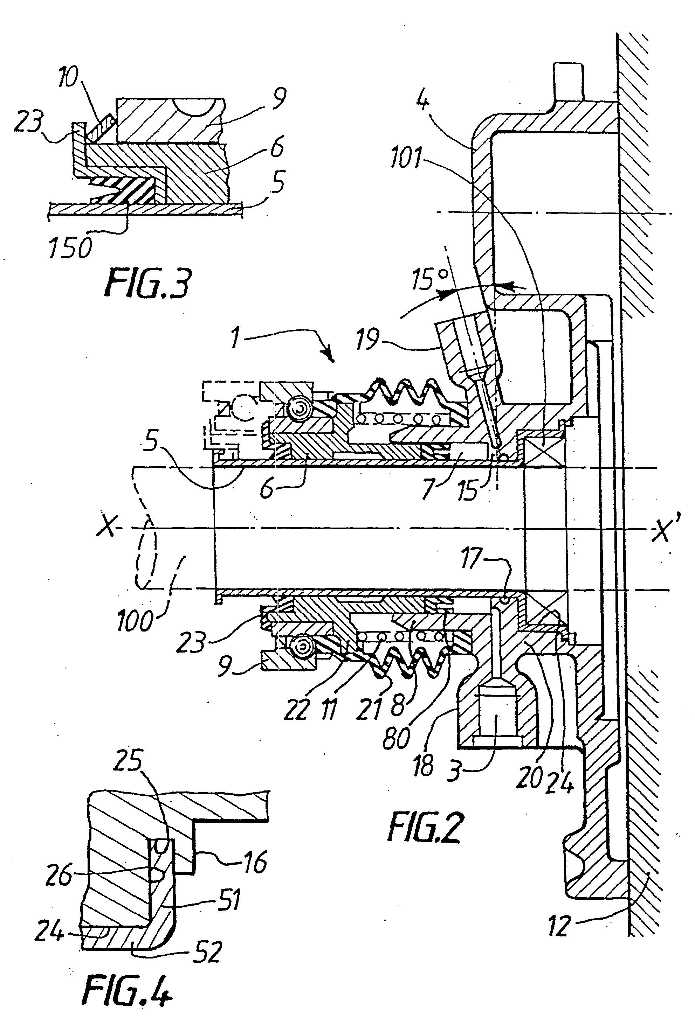

Les exemples décrits dans les figures 2-4,6,7,9-13 ne sont pas en accord avec l'invention telle que définie par les revendications.

Dans les figures tous les éléments communs aux différentes formes de réalisation seront affectés des mêmes références.

Dans les figures est représenté le récepteur 1 concentrique d'une commande hydraulique d'embrayage comprenant, de manière connue, un émetteur, dont la sortie est reliée via une canalisation 2 à une entrée d'alimentation 3 du récepteur 1 doté d'une chambre à volume variable.

L'émetteur est activé de différentes manières et comporte un piston 6 mobile à l'intérieur d'un corps fixe 4, 5.

S'agissant ici d'une application pour véhicule automobile, l'émetteur peut être activé par le conducteur via la pédale de débrayage.

En variante l'émetteur peut être activé de manière assistée par exemple à l'aide d'un moteur électrique, dont l'une des bornes d'alimentation est reliée à un calculateur commandant la mise en route du moteur selon des programmes déterminés ; l'arbre de sortie dudit moteur formant l'élément d'entrée d'une transmission mécanique à moyens élastiques d'assistance, ladite transmission comprenant un élément de sortie par exemple sous forme d'un poussoir agissant sur le piston de l'émetteur. Dans tous les cas, le piston définit avec le corps fixe de l'émetteur une chambre à volume variable. Lorsque l'émetteur est activé son piston est déplacé axialement en sorte que la chambre à volume variable est pressurisée, ainsi que la chambre à volume variable du récepteur 1, qui augmente de volume tandis que celle de l'émetteur diminue de volume.

Lorsque l'émetteur est: désactivé les chambres de l'émetteur et du récepteur sont dépressurisées, la chambre du récepteur diminuant de volume tandis que celle de l'émetteur augmente de volume. Il y a donc lors de ces opérations transfert de fluide de commande d'une chambre à l'autre. On notera que le diaphragme, que comporte classiquement un embrayage à friction, exerce une action de rappel du piston lorsque l'embrayage est réengagé ; la chambre du récepteur reprenant son volume initial.

Le fluide de commande peut être de nature gazeuse. Il peut s'agir par exemple d'air comprimé. Ici le fluide de commande est de nature hydraulique et consiste en de l'huile.

Par simplicité la commande sera appelée commande hydraulique, quelle que soit la nature du fluide.

Ainsi qu'on le sait la chambre du récepteur 1 est délimitée par une partie fixe 4 et 5 et par une partie mobile 6 en relation de cylindre-piston.

La partie fixe 4,5 délimite une cavité 7 de forme annulaire dans laquelle débouche l'entrée d'alimentation 3.

La partie mobile est un piston 6 de forme annulaire mobile axialement à l'intérieur de la cavité 7 pour définir avec celle-ci la chambre à volume variable précitée.

La cavité 7, ainsi que ladite chambre, est donc admise à être pressurisée et dépressurisée à partie de l'entrée 3 via la canalisation 2.

Ici la partie fixe 4,5 et la partie mobile 6 - le piston 6 - sont coaxiales en étant agencées de manière concentrique. Le récepteur 1 est donc du type concentrique ; la cavité 7 étant borgne, d'orientation axiale et annulaire.

Plus précisément la partie fixe 4,5 est ici en deux pièces 4,5 concentriques.

L'une des pièces, à savoir la pièce externe 4, globalement de forme annulaire et dénommée, ci-après corps externe, comporte centralement une portion avant d'extrémité globalement tubulaire 8 entourant l'autre pièce 5 en forme de tube-guide 5 et appartenant à une protubérance 20, globalement de forme tubulaire. Ce tube 5 est métallique. Il est de faible épaisseur pour réduction de l'encombrement radial et à un axe de symétrie axiale X-X'.

L'épaisseur du tube 5 est inférieure à l'épaisseur de la portion tubulaire 8, de longueur axiale inférieure à celle du tube 5.

Le tube 5, ici métallique, fait saillie axialement par rapport à la portion tubulaire 8 et sert de guide au piston 6, qui entoure ainsi la partie principale du tube 5, en étant entouré par la portion tubulaire 8.

Le piston 6 porte à son extrémité arrière un joint dynamique à lèvres 80. Ce joint pénètre à l'intérieur de la cavité 7 et rend celle-ci étanche. L'extrémité avant du piston 6 agit sur une butée de débrayage 9, qui consiste ici en un roulement à billes comportant une bague tournante, formant élément d'attaque, propre à agir sur le diaphragme de l'embrayage et une bague non tournante en relation avec le piston 6. Ce piston 6 agit par son extrémité avant sur la bague non tournante, séparée de la bague tournante par des billes.

Ici les bagues du roulement 9 sont concentriques et coaxiales. Ce roulement de butée est porté par le piston 6 coulissant axialement le long du tube 5 métallique.

Le roulement 9 peut être fixe radialement en étant par exemple emmanché à force par sa bague non tournante sur le piston 6.

Ici le roulement peut se déplacer radialement par rapport au piston 6 et au diaphragme de l'embrayage pour diminuer les usures sachant que l'axe de symétrie axiale, du diaphragme, n'est pas confondu avec celui du récepteur 1.

Le centrage du roulement 9 par rapport au diaphragme peut ne pas être maintenu. Par exemple un élément en matière élastique, tel que de l'élastomère, peut être interposé radialement entre le piston 6 et la bague non tournante du roulement. Cet élément attelle également le roulement au piston.

Ici un jeu radial existe entre l'extrémité avant du piston 6 et le roulement 9 et une rondelle élastique à action axiale 10 attelle le roulement au piston 6. Le roulement 9 peut cheminer radialement par rapport au piston jusqu'à trouver sa position de centrage par rapport au diaphragme. Ce centrage est par la suite maintenu par la rondelle élastique 10. La butée de débrayage 9 est ainsi à autocentrage maintenu.

La bague tournante, ici la bague externe, est profilée pour contact local avec le diaphragme, plus précisément pour contact local avec l'extrémité interne des doigts de celui-ci.

Ainsi lorsque l'extrémité interne des doigts du diaphragme, centralement ouverte, est de forme bombée, la face avant de la bague tournante, destinée à coopérer avec ladite extrémité, est de forme globalement plane.

Lorsque l'extrémité interne doigts du diaphragme est plane, la face externe de la bague tournante est alors bombée.

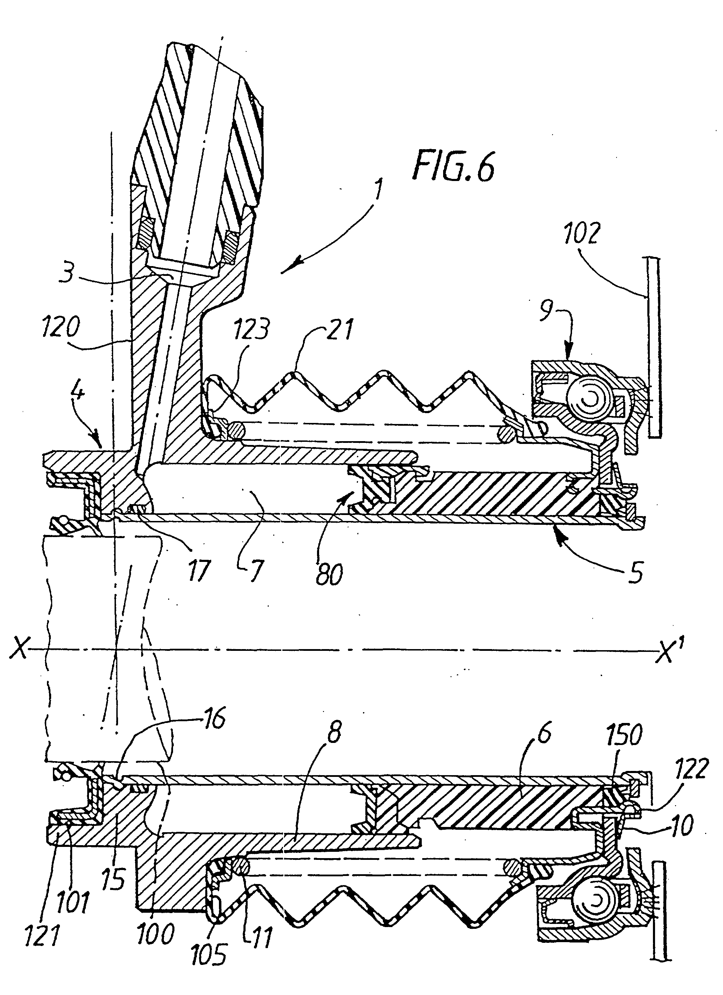

Ici la butée 9 est propre à agir en poussée sur l'extrémité interne, représentée en 102 à la figure 6, des doigts du diaphragme, dont la partie périphérique, en forme de rondelle Belleville, agit sur le plateau de pression de l'embrayage pour normalement solliciter ledit plateau en direction du volant moteur du véhicule, formant plateau de réaction, afin de serrer les garnitures de friction de la friction d'embrayage entre lesdits plateaux de réaction et de pression solidaires en rotation du vilebrequin du moteur du véhicule.

Cette friction, appelée également disque de friction, comporte centralement un moyeu accouplé de manière rigide ou élastique à un disque portant les garnitures de friction. Le moyeu est cannelé intérieurement pour sa liaison en rotation à un arbre mené ici l'arbre d'entrée 100 de la boîte de vitesses. Cet arbre 100 traverse le tube-guide 5 en étant entouré par celui-ci. L'embrayage est donc normalement engagé, le volume de la chambre variable du récepteur 1 étant alors minimum. Un ressort de rappel 11 est interposé axialement entre la portion 8 et le roulement à billes afin de maintenir, de manière connue, la bague tournante du roulement 9 en contact permanent avec le diaphragme pour diminuer les usures. Le couple de l'arbre moteur est donc transmis à l'arbre d'entrée de la boîte de vitesses.

Pour désengager l'embrayage on pressurise de manière précitée la cavité 7 du récepteur ce qui provoque une augmentation de volume de la chambre de celui-ci et un déplacement du piston 6 et de la butée 9 vers la gauche de la figure 2.

Le diaphragme, monté de manière pivotante sur un couvercle solidaire du volant moteur, bascule jusqu'à ce que son action sur le plateau de pression s'annule. L'embrayage est alors désengagé car les garnitures de friction de la friction d'embrayage sont alors libérées.

Le couple moteur n'est alors plus transmis à l'arbre d'entrée de la boîte de vitesses présentant un carter 12. Bien entendu, l'embrayage peut être équipé d'un dispositif de rattrapage d'usure des garnitures de friction.

Lorsque l'on dépressurise la cavité 7, le diaphragme déplace la butée de débrayage et le piston vers la droite de la figure 2. Le volume de la chambre du récepteur 1 est alors minimal et le piston 6 reprend sa position initiale. Dans cette position, une pression résiduelle existe dans la cavité 7.

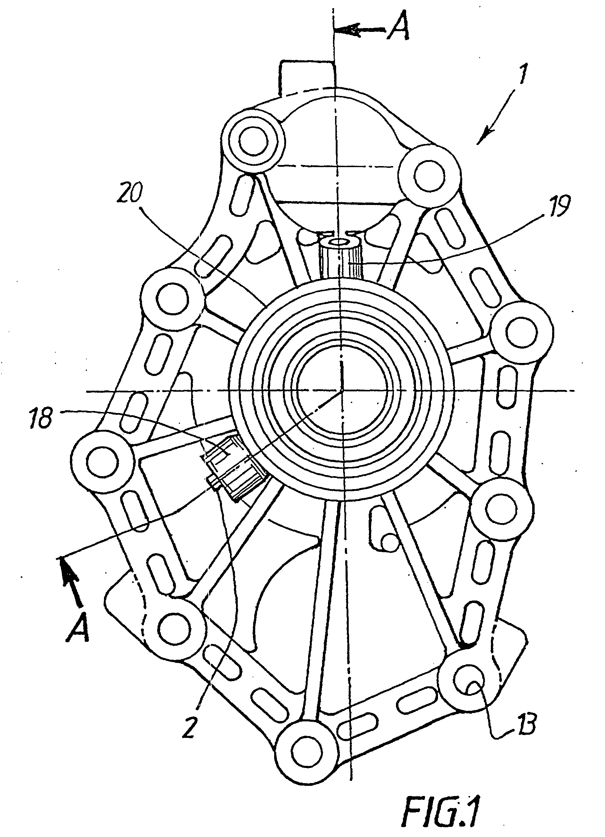

La partie fixe 4,5 est destinée à être fixée ici sur la paroi avant 12 du carter fixe de la boîte de vitesses. La paroi 12 est traversée par l'arbre d'entrée 100 de la boite de vitesses avec intervention d'un joint 101, dit joint tournant (mieux visible à la figure 6) entre la paroi 12 et l'arbre d'entrée de manière décrite ci-après. Cette paroi 12 est donc dotée d'une ouverture pour la traversée de l'arbre d'entrée. Cette ouverture est ici importante et est fermée dans les figures 1 à 4 par une plaque nervurée 4 dotée de nombreux trous 13 pour fixation de la plaque 4 sur la paroi 12 à l'aide de vis dont le fût fileté traverse les trous 13 pour venir en prise avec des taraudages de la paroi 12.

Les têtes des vis prennent appui sur la face avant de la plaque 7, ici globalement de forme ovoïde. Cette plaque 4 sert de plaque de fermeture à l'ouverture de la paroi 12 précitée.

Suivant une caractéristique on tire parti de cette plaque 4 pour intégrer cette plaque au récepteur 1 hydraulique et former le corps externe 4 précité entourant le tube-guide 5.

Ainsi la protubérance 20 avec sa portion tubulaire 8, d'orientation axiale, est solidaire de la plaque. Cette protubérance 20 peut être rapportée par soudage sur la plaque 4 trouée pour passage de l'arbre d'entrée de la boîte de vitesses. Ici la protubérance 20 est de forme annulaire et est d'un seul tenant avec la plaque 4 en matière moulable. Cette plaque 4 est ici à base d'aluminium. On en profite, compte tenu de la robustesse de la plaque 4, pour prolonger celle-ci, à l'arrière de la paroi 8, par un rebord transversal 15 dirigé radialement vers l'intérieur constituant le fond de la cavité borgne 7. Ce rebord 15 sera dénommé rebord interne et est plus épais que le tube-guide 5. Il est dirigé radialement vers l'axe X-X'.

Cette disposition permet de limiter la déformation de la cavité 7 sous l'effet des variations de pression dont elle est l'objet lors des opérations de débrayage et de réembrayage de l'embrayage. Le déplacement du piston 6 est ainsi plus précis et plus fidèle.

En outre on ménage le tube de guidage 5 et plus précisément les moyens d'assemblage 16 de celui-ci à la plaque 4 de fermeture, ainsi que le joint d'étanchéité 17 statique de la cavité 7. Le joint 17 est de forme torique.

Ici les moyens d'assemblage 16 consistent en une fixation par sertissage d'une collerette 51, d'orientation transversale, dirigée radialement vers l'extérieur, que présente le tube-guide 5 à son extrémité arrière.

Ces moyens de sertissages 16 sont décalés axialement et radialement par rapport: au joint d'étanchéité 17 intervenant entre la périphérie interne du rebord interne 15, dirigé radialement vers l'intérieur, et la périphérie externe du tube-guide 5. Ici le joint 17 est porté par le rebord interne 15 en étant monté dans une gorge d'étanchéité non référencée que celui-ci présente à sa périphérie interne. Ce rebord 15 est de faible hauteur et appartient à la protubérance 20 précitée, ici d'un seul tenant avec la plaque 4. Les moyens de sertissage 16 sont décalés vers l'arrière par rapport au joint d'étanchéité.

La portion tubulaire 8 constitue la partie avant de cette protubérance 20, comportant à sa périphérie externe deux saillies 18,19 dirigées globalement radialement vers l'extérieur.

Les saillies 18,19 sont dotées de perçages, comme visible à la figure 2, prolongés dans la masse de la protubérance pour déboucher dans le fond de la cavité 7 borgne de commande. Les perçages débouchent donc au niveau de la face avant du rebord 15, sachant que les saillies 18,19 appartiennent respectivement à l'entrée d'alimentation 3 et au circuit de purge. Le ressort de rappel 11 entoure la portion tubulaire 8 en étant centré par celle-ci. Un épaulement est formé à la jonction de la portion tubulaire 8 avec la partie principale de la protubérance 20 propre à être traversée ici par l'arbre d'entrée 100 de la boîte de vitesses.

Cet épaulement sert d'appui à un bourrelet d'extrémité que présente un soufflet de protection 21 entourant le ressort 11, en forme de ressort à boudin. Le ressort 11 s'appuie à l'une de ses extrémités sur ledit bourrelet. L'autre extrémité du soufflet 21 est accrochée sur un voile 22 transversal que présente le piston 6 à son extrémité avant. Le voile 22 est dirigé radialement vers l'extérieur et sert d'appui ici par sa face avant à la bague non tournante de la butée de débrayage 9 et par sa face arrière à l'autre extrémité du ressort 11.

De manière précitée un jeu radial existe entre le piston 6 et cette bague non tournante, ici la bague interne. Le ressort d'autocentrage 10 consiste (figure 3) en une rondelle Belleville prenant appui sur la tranche avant de la bague non tournante et sur une pièce d'assemblage en tôle 23 emmanchée sur la périphérie interne d'un évidement (non référencé) que présente le piston 6 à son extrémité avant. Cet évidement sert de logement à un joint racleur 150 entouré par la pièce 23 et s'appuyant sur un rebord radial dirigé vers l'intérieur, que présente ladite pièce 23 à son extrémité arrière. A son extrémité avant la pièce 23 présente un rebord radial dirigé vers l'extérieur pour appui de la rondelle 10.

La protubérance 20, intérieurement creuse, présente donc intérieurement une portion avant, définissant en partie la cavité 7 ouverte axialement vers l'avant, et une portion arrière étagée séparée l'une de l'autre par le rebord interne 15. Cette portion arrière est étagée et est intérieurement délimitée par une première portion cylindrique d'orientation axiale 24 et une seconde portion cylindrique d'orientation axiale 25 de plus grand diamètre.

La portion 24 est délimitée axialement à l'avant par le rebord 15 et à l'arrière par un rebord 26 (figure 4) d'orientation transversale dirigé radialement vers l'extérieur. Le rebord 26, dit rebord externe, sert d'appui à la collerette arrière 51 du tube-guide 5. Le rebord 26 sert donc d'épaulement de butée à la collerette 51. Le tube-guide 5 épouse extérieurement la forme de la première portion 24 et de la face arrière du rebord 15 en étant en contact intime avec celle-ci.

Le diamètre de la partie principale du tube 5 est donc inférieur à celui de sa portion cylindrique arrière 52. La portion 24 forme donc une portée pour la portion arrière 52 du tube 5.

A partir de l'extrémité arrière de la plaque 4, on repousse axialement la matière issue de la seconde portion 25 de la protubérance 20 de manière connue à l'aide d'un outil de sertissage, pour former des secteurs de sertissage 16, avec immobilisation axiale de la collerette 51 entre l'épaulement 26 de la protubérance 20 et les secteurs de sertissage 16, en forme de secteurs annulaires, sachant que lors de cette opération la matière flue radialement vers l'intérieur. La collerette 51 est également bloquée en rotation sous l'effet de la force de serrage provoquée par le sertissage. Bien entendu én variante les secteurs de sertissage 16 peuvent former un anneau continu.

On notera que le diamètre de la première portion 24, formant portée, est globalement égal au diamètre externe de la portion tubulaire 8, en étant ici légèrement supérieur à celui-ci.

On obtient ainsi un sertissage beaucoup plus robuste que celui décrit dans le document EP-A-0 168 932 car la pression hydraulique d'alimentation de la cavité annulaire 7 s'exerce sur le rebord 15 en sorte que la collerette 51 est ménagée.

Ceci rend plus fiable et plus robuste l'assemblage du tube-guide 5. La durée de vie de ce récepteur est donc augmentée et ce de manière simple et économique, le tube-guide 5 métallique étant obtenu aisément par repoussage de matière, tandis que la plaque 4 en matière moulable est obtenue aisément par moulage. Le joint 17 est également ménagé car le sertissage n'est pas effectué à ce niveau contrairement à la disposition décrite dans le document EP-A-0 168 932. Le joint 17 n'est pas écrasé axialement.

L'étanchéité du récepteur 1 est donc améliorée en étant plus fiable. En outre la portion arrière 52 du tube 5 peut servir de portée de centrage au joint schématisé en 101, en contact avec l'arbre d'entrée de la boîte de vitesses. L'étagement interne de la portion arrière du tube 5 et de la plaque 4 favorise cela.

On appréciera que la plaque 4 nervurée est robuste et que les amorces de rupture sont très diminuées par rapport à une solution dans laquelle le récepteur est fixé par des oreilles au carter de la boîte de vitesses.

Cela est dû au grand nombre de trous de fixation 13. Bien entendu un joint d'étanchéité (non visible) est interposé entre le carter 12 et la plaque 4, sachant que la plaque 4 se fixe au niveau du bord de l'ouverture du carter 12 de la boîte de vitesses pour fermer ladite ouverture.

Bien entendu, en variante, la boîte de vitesses peut être remplacée par une autre boîte de transmission par exemple à poulies variables.

En variante les moyens d'assemblage 16 peuvent consister en une fixation à l'aide de vis de la collerette 51 sur l'épaulement de butée 26.

Tout autre moyen d'assemblage est envisageable.

Ainsi qu'on l'aura compris le rebord externe 26 délimite à l'avant la seconde portion cylindrique 25 servant de portée de centrage à la collerette 51 en étant en contact intime avec la périphérie externe de la collerette 51.

A la figure 2 on voit donc les traces du repoussement de matière conduisant à élargir la deuxième portion 25.

On notera que la plaque 4 est dotée de nervures (figure 1) reliant sa protubérance à des zones dotées des trous 13 de fixation.

Cette fixation en variante peut être réalisée par rivetage ou à l'aide de boulons.

Bien entendu, la présence d'une plaque de fermeture de grande taille n'est pas obligatoire. La plaque 4 peut être remplacée par un corps extérieur de plus petite taille et le sertissage peut être réalisé au voisinage du rebord 15.

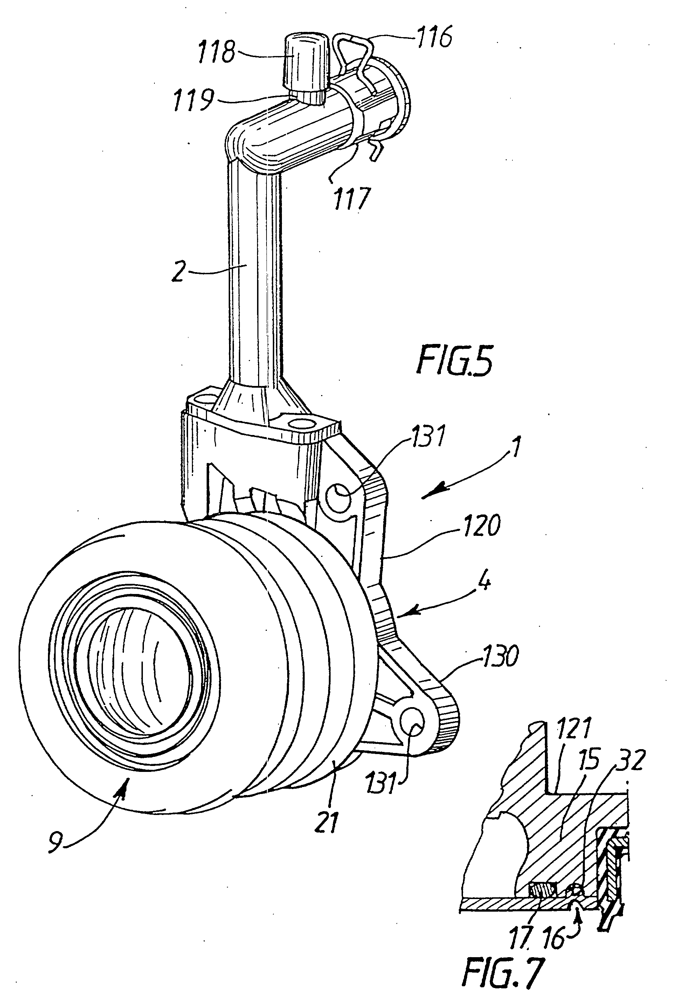

Ainsi, à la figure 5, c'est la pièce externe 4 de la partie fixe 4,5 qui est fixée sur le carter de la boîte de vitesses, au niveau de l'ouverture précité du carter.

Plus précisément cette pièce 4 forme un corps extérieur globalement de forme annulaire entourant le tube-guide interne 5. Le corps 4 présente deux oreilles 130, dont une seule est visible à la figure 5, pour sa fixation sur la paroi du carter de la boîte de vitesses, usuellement à l'aide de vis traversant chacune une ouverture 131 que présente chaque oreille. Il est prévu également un troisième point de fixation dont on voit en 131 le trou de passage.

L'arrière du corps 4 est globalement en forme de plaque 120 de plus petite taille que la plaque 4 de la figure 1, dont est issue par moulage la portion avant tubulaire 8. Le corps 4, en matière moulable est par exemple à base d'aluminium.

Les oreilles 130 appartiennent à la plaque 120 à trois points de fixation et s'étendant en majeure partie radialement vers l'extérieur.

Suivant une caractéristique on en profite, compte tenu de la robustesse du corps 4, pour prolonger celui-ci, à l'arrière de la paroi 8 et de la plaque 120, par un rebord transversal 15, dirigé radialement vers l'intérieur, constituant le fond de la cavité borgne 7. Ce rebord 15, dénommé rebord interne, appartient à un tronçon tubulaire arrière 121 s'étendant à l'arrière de la plaque 120. Le rebord 15, dirigé radialement vers l'axe X-X', est plus épais que le tube 5.

Le rebord 15 permet de limiter la déformation de la cavité 7 sous l'effet des variations de pression dont elle est l'objet lors des opérations de débrayage et de réembrayage de l'embrayage. Le déplacement du piston 6 est ainsi plus précis et plus fidèle.

En outre on ménage le tube 5 et plus précisément les moyens d'assemblage 16 de celui-ci au corps 4, ainsi que le joint d'étanchéité 17 statique de la cavité 7. Ce joint 17 est ici de forme torique en étant axialement de forme oblongue pour un bon contact avec le tube 5 et une bonne étanchéité.

Ici les moyens d'assemblage 16 consistent en une fixation par sertissage.

Plus précisément le tronçon arrière 121 est entaillé, comme à la figure 2, pour logement du joint 101 et délimiter le rebord 15. Une gorge d'assemblage 32 est réalisée à l'arrière du rebord 15 et l'on fait fluer le métal du tube 5 à l'intérieur de la gorge 32, ici de section semi-circulaire favorable à une bonne fixation. L'épaisseur du tube 5 rend cela possible. On notera que le joint 101 s'appuie ici, contrairement à la figure 2, directement sur la face du rebord 15 tournée à l'opposé de la cavité 7. Grâce à ce mode d'assemblage, en combinaison avec le rebord 15, le tube est de forme simple et ne comporte pas à l'arrière une collerette transversale pour sa fixation par sertissage au corps 4. On économise de la matière. Le tube 5 étant de forme purement tubulaire.

Le tube 5 subit de très faibles déformations sous l'effet des variations de pression dans la cavité 7. Le piston 6 se déplace dans de bonnes conditions

Ces moyens de sertissage 16 sont décalés axialement vers l'arrière par rapport au joint d'étanchéité 17 intervenant entre la périphérie interne du rebord 15, dirigé radialement vers l'intérieur, et la périphérie externe du tube-guide 5. Ici, le joint 17 est porté par le rebord interne 15, en étant monté dans une gorge d'étanchéité évasée, non référencée, que celui-ci présente à sa périphérie interne. La gorge d'étanchéité est évasée radialement vers l'intérieur en direction de l'axe X-X' et axialement est plus large que la gorge d'assemblage 32. Ce rebord 15 est de faible hauteur et appartient à la partie arrière du corps 4, dont la plaque 120 est percée pour former l'entrée d'alimentation 3 débouchant dans le fond de la cavité 7. La canalisation 2 est rapportée par vissage de son embase sur le bord supérieur de la plaque 120, dans le prolongement de l'entrée 3. Les moyens de sertissage 16 - fluage local du tube 5 dans le gorge 32 - sont implantés axialement entre les joints 17 et 101. On notera que la solution est plus simple que celle des figures 1 et 2 car le canal 3 est réalisé dans l'épaisseur de la plaque 120.

Le ressort de précharge 11 entoure la portion tubulaire 8 en étant centré par celle-ci. Un épaulement 105 est formé à la jonction de la portion tubulaire 8 avec la plaque 120 propre à être traversée par l'arbre 100.

On notera que le corps 4 ne présente pas de canal de purge, celle-ci étant réalisée à la périphérie externe de la canalisation 2 en 119.

Plus précisément la canalisation 2 s'étend à l'extérieur du carter de la boîte de vitesses et traverse ledit carter. Cette canalisation présente à l'extérieur dudit carter une protubérance tubulaire 119 servant à effectuer la purge. Cette protubérance est normalement recouverte par un capuchon de protection 118. La canalisation présente une extrémité externe 117 conformée en connecteur femelle brochable avec une épingle 116 engagée dans des fentes de l'extrémité 117 pour recevoir le connecteur mâle d'une conduite venant de l'émetteur.

La canalisation 2 a une forme d'équerre avec une partie verticale se fixant sur la plaque 120 et une partie globalement horizontale s'étendant à l'extérieur du carter de la boîte de vitesses et portant la purge 119 et le raccord d'extrémité. Ici, la canalisation 2 présente une embase avec latéralement deux trous pour passage de vis permettant de fixer l'embase sur la tranche externe de la plaque 120 (figure 5). Bien entendu la canalisation 2 peut être rapportée par brochage ou vissage sur le corps 4. L'épaulement 105 sert d'appui à un bourrelet d'extrémité que présente, comme à la figure 2, un soufflet de protection 21 entourant le ressort 11, en forme de ressort à boudin. Le ressort 11 s'appuie à l'une de ses extrémités sur ledit bourrelet par l'intermédiaire d'une pièce d'appui métallique 123 interposée entre le ressort et le bourrelet. La pièce 123 présente deux parties transversales raccordées l'une à l'autre par une partie globalement horizontale. L'une des parties transversales est en contact avec le bourrelet d'extrémité radialement au-dessus de l'autre partie transversale en contact avec le ressort 11 centré par une surépaisseur, que présente l'extrémité arrière de la portion tubulaire avant 8.

L'autre extrémité du soufflet 21 est accrochée sur une pièce métallique d'appui et de support 122, dite pièce porteuse 122, de forme annulaire.

La pièce porteuse 122 est ici en tôle et porte la rondelle élastique 10, appelée usuellement rondelle d'auto-centrage, le roulement 9 et le bourrelet d'extrémité avant du soufflet 21.

La pièce 122 est noyée (ancrée) en partie dans le piston 6 en matière synthétique, ici en matière plastique renforcée par des fibres. Le piston 6 peut être par exemple à base de « Delrin » ou peut être en tout autre matière présentant des bonnes qualités de coulissement. A l'avant du piston 6, il est prévu le joint racleur 150, pour, de manière connue, éviter de polluer les garnitures de friction du disque de friction.

La pièce 122 présente pour se faire, des trous pour son ancrage ferme dans le piston 6 par la technique du surmoulage. La pièce 122 est donc fixée par surmoulage au piston 6 en matière synthétique. La pièce 122 porte la rondelle 10, le joint 150, le roulement à billes 9, dont la bague externe coopère avec l'extrémité 102 des doigts du diaphragme, l'extrémité du soufflet 21 et du ressort de précharge 11. La pièce sert d'appui au bord intérieur du roulement 9 en forme de drapeau et étanche. A la figure 6, on voit en 80 le joint d'étanchéité dynamique. Bien entendu la pièce 122 peut être rapportée par encliquetage sur le piston 6. On appréciera que le roulement 9 s'étend en majeure partie au dessus de la pièce 122 en étant dirigé axialement vers la plaque 120 pour réduire l'encombrement axial.

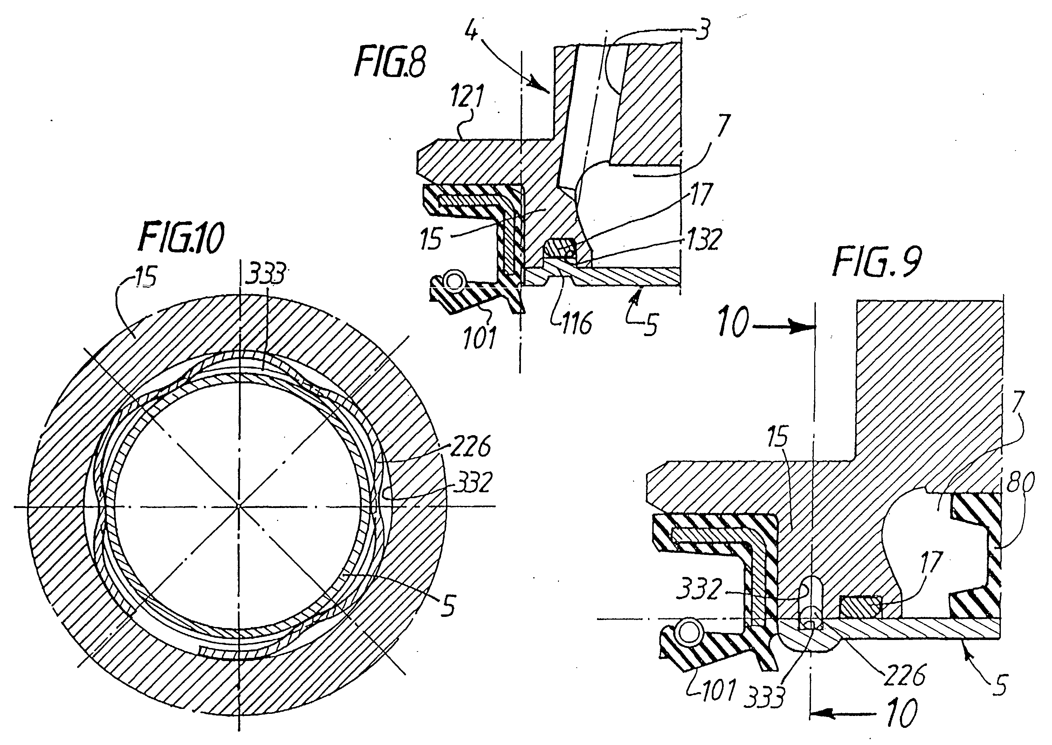

En variante les moyens d'assemblage 16 du tube 5 au corps 4 peuvent avoir une autre forme. Ainsi à la figure 8 le joint 17 est monté dans le fond d'une section gorge d'assemblage et d'étanchéité 132 de forme trapézoïdale. Le refoulement local de matière 116 du tube 5 est réalisé directement dans cette gorge 132.

Le joint 17 est comprimé entre le refoulement 116, dirigé à l'opposé de l'axe X-X' et le fond de la gorge 132. Dans ce cas on réduit les usinages du rebord 15.

En variante, les figures 9 et 10, le joint 17 est comme la figure 6 placé dans une gorge d'assemblage particulière 332 moins large axialement que la gorge d'étanchéité. L'assemblage est réalisé à l'aide d'un circlips 226 ondulé radialement et ouvert monté dans une gorge radiale 332 d'assemblage de forme oblongue ménagée dans le rebord 15 et dans une gorge 333 ménagée en correspondance dans l'extrémité arrière du tube 5. Cette gorge 333 conduit à refouler localement le tube 5 vers l'intérieur de manière analogue pour former la gorge 153. Ainsi l'assemblage du tube 5 avec le corps 5 se fait par encliquetage le circlips étant placé par avance dans la gorge 332. Ce circlips 226 est déformable élastiquement radialement vers l'intérieur pour se refermer puis se détendre et tomber dans la gorge 333 lors de l'assemblage du tube 5 avec le corps 4.

Le tube intérieur 5 a donc une forme symétrique, ce tube présentant à une extrémité avant une gorge (non référencée à la figure 6) pour montage d'un circlips. Cette gorge à la même forme que la gorge 333. Bien entendu le joint 80, comporte une lèvre externe, pour contact avec la périphérie interne de la portion 8 du corps 4, et une lèvre interne pour contact avec la périphérie externe du tube 5.

Bien entendu, le corps extérieur peut être monté de manière indirecte sur la structure fixe, via le carter de la boîte de vitesses, par l'intermédiaire d'une semelle d'adaptation comme décrit, par exemple, dans le document FR-A-2 745 616.

Dans ce cas, le corps externe est standard et c'est la semelle qui porte les oreilles de fixation des moyens d'assemblage du type baïonnette, intervenant entre la semelle et le corps externe. La butée de débrayage peut avoir, en inversant les structures, une bague intérieure tournante et une bague extérieure non tournante, dotée d'un rebord interne, destinée à porter, sous l'action de la rondelle élastique d'autocentrage, contre le tronçon transversal d'appui que présente la pièce porteuse 122.

Ainsi qu'il ressort: à l'évidence de la description des dessins, le rebord interne 15, obtenu avantageusement par moulage, est plus épais que le tube-guide 5. Les moyens d'assemblage 16 peuvent être des moyens de sertissage ou d'encliquetage et permettent de fixer le tube-guide 5 au rebord interne 15. Les gorges d'assemblage 32, 132, 332, du rebord interne, débouchent à la périphérie interne du rebord 15.

Le corps extérieur 4 peut être en matière synthétique moulable, telle que la matière plastique renforcée par des fibres.

Le circlips de la figure 6, forme une butée d'arrêt pour le piston 6. Cette butée peut avoir une autre forme.

On notera que l'entrée du fluide de commande, ici de l'huile, dans la cavité 7 se fait dans de très bonnes conditions. En effet, dans toutes les figures, l'entrée 3, en forme de canal, débouche au niveau de la partie supérieure de la face avant du rebord interne 15. Cette partie supérieure forme un dégagement (une entaille) de forme arrondie prolongée par une face inclinée.

L'alésage interne de la portion 8 est également entaillée à sa partie arrière au niveau de l'entrée 3. Cela permet d'effectuer un rodage et évite que la lèvre supérieure du joint 80 ne vienne en contact avec le rebord 15. Le dégagement de la face avant du rebord 15, délimitant la cavité 7, affecte donc également l'extrémité arrière de la périphérie interne de la portion avant 8.

Bien entendu, le tube 5 peut présenter comme dans les figures 1 à 4 un flasque d'extrémité 215, dirigé radialement en direction opposée de l'axe X-X' et serti en 216 au contact de la face transversale 115 arrière du rebord 15 tournée à l'opposé de la cavité 7. Le tube ne présente pas de collerette d'extrémité.

Le sertissage 216 est ici du type axial, la matière du tronçon arrière 121 étant écrasée axialement pour de préférence formation de secteurs de sertissage comme dans le mode de réalisation des figures 1 à 4. Ce n'est pas la matière du tube qui flue et on économise de la matière par rapport aux modes de réalisation de la figure 2.

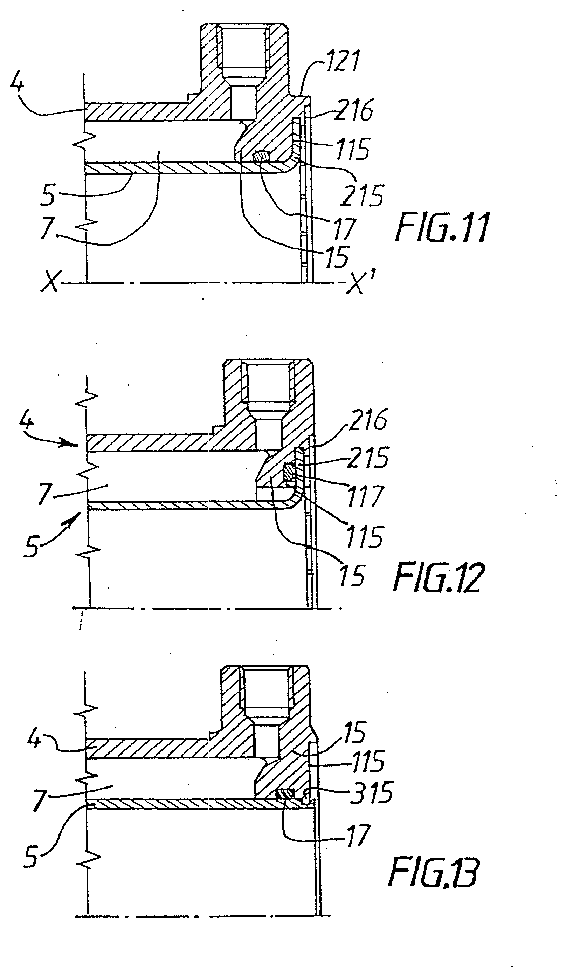

Bien entendu, figure 12, le joint statique 117 peut être implanté dans une gorge (non référencée) ménagée dans la face transversale 115, un jeu radial existe entre le tube 5, dont le flasque 215 est serti comme à la figure 11, et la périphérie interne du rebord 15.

En variante, (figure 13) le rebord 15 présente à sa périphérie interne une collerette 315 prolongeant sa face 115.

Le tube 5 présente une réduction d'épaisseur à son extrémité adjacente à la collerette 315 pour formation d'un épaulement formé à la faveur de la réduction d'épaisseur et coopérant avec la face avant de la collerette 315 tournée vers la cavité 7. Après, on rabat la matière de l'extrémité libre du tube-guide 5 au contact de la face arrière de la collerette 315 pour fixation par sertissage du tube 5 sur la collerette 315, le joint 17 étant monté dans une gorge d'étanchéité comme dans les figures 1 et 16.

Bien entendu, on peut combiner les différents modes de réalisation entre eux, le joint tournant n'étant pas forcément porté par le corps externe.

Ainsi, les modes d'assemblages sur les figures 6 à 10 peuvent être réalisés dans la face arrière 115 du rebord interne 15.

Cette face peut donc comporter une gorge d'assemblage distincte ou non d'une gorge d'étanchéité, la matière du flasque 215 étant refoulée à l'intérieur de la gorge d'assemblage de préférence évasé en direction opposée de la cavité 7.

On obtient ainsi un bon blocage en rotation du tube 5 grâce à l'évasement de la gorge d'assemblage formant éventuellement également gorge d'étanchéité.

Pour éviter que le flasque 215 s'échappe axialement en direction opposée à la cavité on bloque axialement le flasque 215 à l'aide, par exemple, d'un circlips engagé dans une gorge du corps pour pincer le flasque 215 entre la face 115 et le circlips. Avantageusement, la gorge d'assemblage est implantée radialement au dessus de la gorge d'étanchéité. En variante, le corps 4 est fileté intérieurement à l'arrière pour montage d'une rondelle fileté extérieurement. Cette rondelle forme un écrou pour pincer le flasque entre la face 115 et ledit écrou.

En variante, on peut utiliser une pièce intermédiaire sertie comme décret dans le document FR - 96 11888, déposé le 30/11/1996, pour réaliser le calage axial.

Bien entendu, on peut coller le flasque 215 sur la face 115 lorsque notamment le corps 4 est en matière plastique.

## Revendications

1. Récepteur hydraulique (1) pour commande d'embrayage doté d'un dispositif de débrayeur (102), notamment de véhicule automobile, comportant une partie fixe (4,5) comprenant un tube-guide interne (5) métallique doté d'un axe symétrique axial (X-X') et un corps extérieur concentrique (4) définissant une cavité annulaire borgne (7) propre à être alimentée en fluide et à l'intérieur de laquelle est monté mobile axialement, un piston (6), portant un élément d'attaque (9) propre à agir sur le dispositif débrayeur (102) de l'embrayage, dans lequel des moyens d'assemblage (116) interviennent entre le corps extérieur (4) et le tube-guide interne (5), le fond de la cavité borgne (7) étant constitué par un rebord interne (15), du corps extérieur (4), dirigé vers l'axe de symétrie axiale (X-X') du tube-guide (5) et plus épais que le tube-guide (5), un joint d'étanchéité statique intervenant entre le rebord interne (15) et le tube-guide (5) en étant monté dans une gorge cl'étanchéité formée dans le rebord interne (15), dans lequel les moyens d'assemblage (116) interviennent entre le rebord interne (15) et le tube-guide (5) pour fixer le tube-guide sur le corps extérieur (4) et comportent une gorge d'assemblage (132) formée dans le rebord interne (15), **caractérisé en ce que** la gorge d'assemblage (132) est confondue avec la gorge d'étanchéité (132).

2. Récepteur selon la revendication 1, **caractérisé en ce que** les moyens d'assemblage (16) consistent en des moyens de sertissage et en ce que la matière du tube-guide (5) est refoulée par sertissage localement dans la gorge d'assemblage (32, 132).

3. Récepteur selon la revendication 2, **caractérisé en ce que** le joint d'étanchéité (17) est interposé entre le fond de la gorge d'assemblage (132) et le refoulement local (116) de matière du tube-guide (5).

4. Récepteur selon l'une des revendications 2 ou 3, **caractérisé en ce que** les moyens d'assemblage (16) interviennent entre la périphérie externe du tube-guide (5) et la périphérie interne du rebord interne (15).

5. Récepteur selon l'une des revendications 1 à 4, **caractérisé en ce qu**'un joint d'étanchéité statique (17) intervient entre la périphérie interne du rebord interne (15) et la périphérie externe du tube-guide (5),

6. Récepteur selon l'une des revendications 1 à 5, **caractérisé en ce que** les moyens d'assemblage sont des moyens d'encliquetage.

7. Récepteur selon la revendication 6, **caractérisé en ce que** les moyens d'assemblage comportent un anneau ouvert et de forme ondulée (226) radialement engagé dans une gorge oblongue d'assemblage (332) ménagée dans le rebord interne et dans une gorge en vis-à-vis ménagée dans le tube-guide (5) à l'une des ses extrémités axiales.

8. Récepteur selon l'une des revendications 1 à 7, **caractérisé en ce que** le piston est en matière synthétique et coulisse directement sur le tube-guide (5).

## Patentansprüche

1. Hydraulischer Nehmerzylinder (1) für eine Kupplungsbetätigung mit einer Ausrückvorrichtung (102), insbesondere für Kraftfahrzeuge, umfassend einen ortsfesten Teil (4, 5), der ein inneres Führungsrohr (5) aus Metall mit einer axialen Symmetrieachse (X-X') und einen konzentrischen Außenkörper (4) enthält, der einen ringförmigen Blindhohlraum (7) definiert, der mit Fluid befüllt werden kann und in dessen Innern axial beweglich ein Kolben (6) gelagert ist, der ein Angriffselement (9) trägt, das auf die Ausrückvorrichtung (102) der Kupplung einwirken kann, wobei Verbindungsmittel (116) zwischen dem Außenkörper (4) und dem inneren Führungsrohr (5) zum Einsatz kommen, wobei der Boden des Blindhohlraums (7) durch eine innere Randleiste (15) des Außenkörpers (4) gebildet wird, die zur. axialen Symmetrieachse (X-X') des Führungsrohrs (5) gerichtet und dicker als das Führungsrohr (5) ist, wobei eine statische Dichtung zwischen der inneren Randleiste (15) und dem Führungsrohr (5) zum Einsatz kommt, die in einer in die innere Randleiste (15) eingearbeitete Dichtungsauskehlung eingesetzt ist, wobei die Verbindungsmittel (116) zwischen der inneren Randleiste (15) und dem Führungsrohr (5) zum Einsatz kommen, um das Führungsrohr am Außenkörper (4) zu befestigen, und eine Verbindungsauskehlung (132) enthalten, die in die innere Randleiste (15) eingearbeitet ist,
**dadurch gekennzeichnet,**
daß die Verbindungsauskehlung (132) mit der Dichtungsauskehlung (132) zusammenfällt.

2. Nehmerzylinder nach Anspruch 1, **dadurch gekennzeichnet**, daß die Verbindungsmittel (16) aus Einpreßmitteln bestehen und daß der Werkstoff des Führungsrohrs (5) durch Einpressen örtlich in der Verbindungsauskehlung (32, 132) gestaucht wird.

3. Nehmerzylinder nach Anspruch 2, **dadurch gekennzeichnet**, daß die Dichtung (17) zwischen dem Boden der Verbindungsauskehlung (132) und der örtlichen Stauchung (116) des Werkstoffs des Führungsrohrs (5) eingefügt ist.

4. Nehmerzylinder nach Anspruch 2 oder 3, **dadurch gekennzeichnet**, daß die Verbindungsmittel (16) zwischen dem äußeren Umfang des Führungsrohrs (5) und dem inneren Umfang der inneren Randleiste (15) zum Einsatz kommen.

5. Nehmerzylinder nach einem der Ansprüche 1 bis 4, **dadurch gekennzeichnet**, daß die statische Dichtung (17) zwischen dem inneren Umfang der inneren Randleiste (15) und dem äußeren Umfang des Führungsrohrs (5) zum Einsatz kommt.

6. Nehmerzylinder nach einem der Ansprüche 1 bis 5,
**dadurch gekennzeichnet**, daß die Verbindungsmittel Rastmittel sind.

7. Nehmerzylinder nach Anspruch 6, **dadurch**
**gekennzeichnet**, daß die Verbindungsmittel einen offenen Ring mit gewellter Form (226) umfassen, der radial in eine längliche Verbindungsauskehlung (332), die in die innere Randleiste eingearbeitet ist, und in eine gegenüberliegende Auskehlung eingesetzt ist, die an einem seiner axialen Enden in das Führungsrohr (5) eingearbeitet ist.

8. Nehmerzylinder nach einem der Ansprüche 1 bis 7, **dadurch gekennzeichnet**, daß der Kolben aus Kunststoff besteht und sich direkt auf dem Führungsrohr (5) gleitend verschiebt.

## Claims

1. A hydraulic receiver (1) for controlling a clutch provided with a clutch release device (102), in particular of an automobile vehicle, having a fixed part (4, 5) including a metal internal guide-tube (5) which has an axial axis of symmetry (X-X') and a concentric exterior body (4) defining a blind annular cavity (7) adapted to be fed with fluid and inside which is mounted an axially mobile piston (6) carrying an attack member (9) adapted to act on the clutch release device (102) of the clutch, wherein assembly means (116) are operative between the exterior body (4) and the internal guide-tube (5), the end of the blind cavity (7) consisting of an internal rim (15) of the exterior body (4) which is directed towards the axial axis of symmetry (X-X') of the guide-tube (5) and thicker than the guide-tube (5), a static seal operative between the internal rim (15) and the guide-tube (5) being mounted in a sealing groove formed in the internal rim (15), in which receiver the assembly means (116) are operative between the internal rim (15) and the guide-tube (5) to fix the guide-tube to the exterior body (4) and include an assembly groove (132) formed in the internal rim (15), which receiver is **characterized in that** the assembly groove (132) and the sealing groove (132) are one and the same.

2. A receiver according to claim 1, **characterized in that** the assembly means (16) consist of crimping means and in that the material of the guide-tube (5) is deformed locally into the assembly groove (32, 132) by crimping it.

3. A receiver according to claim 2, **characterized in that** the seal (17) is disposed between the bottom of the assembly groove (132) and the localized deformation (116) of the material of the guide-tube (5).

4. A receiver according to either claim 2 or claim 3, **characterized in that** the assembly means (16) are operative between the external periphery of the guide-tube (5) and the internal periphery of the internal rim (15).

5. A receiver according to any of claims 1 to 4, **characterized in that** a static seal (17) is operative between the internal periphery of the internal rib (15) and the external periphery of the guide-tube (5).

6. A receiver according to any of claims 1 to 5, **characterized in that** the assembly means are clipping means.

7. A receiver according to claim 6, **characterized in that** the assembly means include an open corrugated ring (226) radially engaged in an oblong assembly groove (332) formed in the internal rib and in a facing groove formed in the guide-tube (5) at one axial end thereof.

8. A receiver according to any of claims 1 to 7, **characterized in that** the piston is made from a synthetic material and slides directly on the guide-tube (5).
